# FASCICULE DE BREVET EUROPEEN

(11) **EP 3 179 888 B1**
(45) Date de publication et mention de la délivrance du brevet: **31.10.2018**
(21) Numéro de dépôt: 14711814.5
(22) Date de dépôt: 20.02.2014
(51) Int. Cl.: A47G 19/02, A47G 23/03, A47G 23/06, B32B 27/38, A47G 19/00, B44C 5/04

(54) **ÉLÉMENT DE VAISSELLE ET PROCÉDÉ DE FABRICATION ASSOCIÉ**
GESCHIRRARTIKEL UND ZUGEHÖRIGES HERSTELLUNGSVERFAHREN
DISHWARE AND ASSOCIATED PRODUCTION PROCESS

(30) Priorité: 20.12.2012 FR 1262420
(43) Date de publication de la demande: 21.06.2017
(73) Titulaire: Revol Porcelaine, 26240 Saint-Uze (FR)
(72) Inventeur: TAMBON, Mathieu, 13190 Allauch (FR)
(74) Mandataire: Chevalier, Renaud Philippe
(86) Numéro de dépôt international: PCT/FR2014/050354
(87) Numéro de publication internationale: WO 2014/096748

(56) Documents cités:
- WO-A2-2004/044083
- FR-A1- 2 729 327
- US-A- 3 421 967
- nostrodomus.fr: "Mealplak : le design s'invite dans vos assiettes", , 17 octobre 2012 (2012-10-17), XP002712546, Extrait de l'Internet: URL:http://www.nostrodomus.fr/actualite/20 12/10/mealplak-le-design-s-invite-dans-vos -assiettes_1350478489.html [extrait le 2013-09-23]
- Laurence Garrisson: "Les Plaks se mettent à table avec Mealplak", , 11 novembre 2012 (2012-11-11), XP002712545, Extrait de l'Internet: URL:http://www.ladecorruptible.com/2012/11 /les-plaks-se-mettent-a-table-avec-mealpla k/ [extrait le 2013-09-23]
- Journal des palaces: "Mealplak: Lauréat 2012 sur Equip'Hôtel (France)", , 30 novembre 2012 (2012-11-30), XP002712544, Extrait de l'Internet: URL:http://www.journaldespalaces.com/index .php?title=Mealplak-Laureat-2012-sur-Equip -Hotel&id_actu=39445&home=actu_detail.php [extrait le 2013-09-23]
- NOSTRODOMUS FR: "Mealplak : le design s'invite dans vos assiettes", INTERNET CITATION, 17 October 2012 (2012-10-17), pages 1-10, XP002712546, Retrieved from the Internet: URL:http://www.nostrodomus.fr/actualite/20 12/10/mealplak-le-design-s-invite-dans-vos -assiettes_1350478489.html [retrieved on 2013-09-10]
- LAURENCE GARRISSON: "Les Plaks se mettent GBP a table avec Mealplak", INTERNET CITATION, 11 November 2012 (2012-11-11), pages 1-2, XP002712545, Retrieved from the Internet: URL:http://www.ladecorruptible.com/2012/11 /les-plaks-se-mettent-a-table-avec-mealpla k/ [retrieved on 2013-09-23]
- JOURNAL DES PALACES: "Mealplak: Lauréat 2012 sur Equip'Hôtel (France)", INTERNET CITATION, 30 November 2012 (2012-11-30), pages 1-2, XP002712544, Retrieved from the Internet: URL:http://www.journaldespalaces.com/index .php?title=Mealplak-Laureat-2012-sur-Equip -Hotel&id_actu=39445&home=actu_detail.php [retrieved on 2013-09-23]

## Description

L'invention a pour objet un élément de vaisselle, destiné à contenir des aliments, ainsi que son procédé de fabrication.

Elle concerne le domaine technique des arts de la table et plus particulièrement ceux des assiettes, bols, plats, plateaux ou similaires. Toutefois, l'invention ne serait être limitée à ce seul domaine : elle concerne également d'autres domaines, tels que, à titre d'exemples non limitatifs, les présentoirs dans le domaine de la joaillerie, les jouets, les objets décoratifs, notamment les luminaires.

Les éléments de vaisselle sont généralement fabriqués en porcelaine, en céramique, en bois, en ardoise ou en faïence. Ces matériaux présentent cependant de nombreux inconvénients :
- ils sont relativement fragiles, c'est-à-dire peu résistants aux chocs et aux fortes températures, que ces dernières soient très hautes ou très basses, et un service de table est souvent ébréché, rayé ou cassé après quelques années d'utilisation ;
- certains ne sont pas faciles à nettoyer, puisqu'ils ne passent pas au lave-vaisselle ;
- ils ne satisfont pas tous aux exigences des normes alimentaires ;
- ils ne sont pas aisément personnalisables.

On connait par les documents US 2002/0079317 (SCOTT) ou FR 2.954.901 (ANNIKIDS), des éléments de vaisselle constitués de deux parties rigides : une partie supérieure présentant une surface pour recevoir les aliments et une partie inférieure présentant une sous face formant embase. Ces deux parties sont amovibles de sorte qu'il est possible de placer entre elles, une feuille de décoration amovible et visible par transparence. Ces deux parties peuvent être réalisées en plastique, ce qui les rend moins fragiles que des éléments de vaisselle fabriqués en porcelaine, en céramique, en bois, en ardoise ou en faïence.

Toutefois, ce type de produit est relativement complexe à fabriquer, assembler et entretenir. En outre, le maintien des deux parties inférieure et supérieure, l'une par rapport à l'autre, se détériore au cours des utilisations successives, puisque les moyens d'accrochage desdites parties inférieure et supérieure s'abîment après des utilisations répétées.

Par ailleurs, les objets décoratifs, tels que des présentoirs ou des luminaires, sont généralement lourds, peu esthétiques et personnalisables.

En outre, les matériaux constituant les jouets sont parfois toxiques ou s'ébrèchent facilement, présentant des dangers pour la santé et la sécurité des enfants.

Dans tout le document, le terme « objet décoratif » désigne tout objet dont la finalité n'est pas alimentaire.

L'invention permet de répondre à tout ou partie des inconvénients soulevés par les solutions connues.

Parmi les nombreux avantages apportés par un élément de vaisselle selon l'invention, nous pouvons mentionner que celui-ci permet :
- d'avoir un matériau composite non toxique, utilisable dans de nombreux domaines ;
- d'avoir un matériau composite résistant aux rayures et/ou aux chocs, peu altérable par des utilisations successives ;
- d'avoir un élément de vaisselle dont la conception permet d'obtenir un effet visuel particulièrement original et attractif.

Un autre objectif de l'invention est de proposer un procédé de fabrication d'un élément de vaisselle en matériau composite, plus simple et rapide à mettre en oeuvre.

A cette fin, il est prévu un élément de vaisselle suivant la revendication 1 et sa méthode de fabrication selon la revendication 8.

En variante ou en complément, la résine époxy opaque peut être colorée.

De manière avantageuse, la face de la couche supérieure peut être une surface antidérapante.

La couche supérieure a une épaisseur supérieure ou égale à trois millimètres et préférentiellement la couche inférieure une épaisseur inférieure à deux millimètres.

Pour créer un effet de sustentation, la couche supérieure peut possèder un indice de réfraction compris entre 1,3 et 1,6.

Pour permettre une personnalisation du matériau composite, une couche intermédiaire comportant des éléments décoratifs peut être insérée entre les couches inférieure et supérieure.

Selon un autre objet, l'invention concerne un procédé de fabrication d'un élément de vaisselle conforme à l'invention. Ledit procédé comprend de manière avantageuse les étapes consistant à :
- découper, selon un contour souhaité, une plaque rigide essentiellement constituée de résine époxy alimentaire ou de polyméthacrylate de méthyle alimentaire, ladite plaque ayant une épaisseur supérieure ou égale à trois millimètres et étant incolore et translucide ;
- poser la plaque découpée sur un support rigide et appliquer, de manière étanche, un coffrage contre le contour de ladite plaque, ledit coffrage présentant des bordures qui dépassent la surface libre de ladite plaque ;
- couler, sur la surface libre de la plaque découpée, et sur une épaisseur supérieure ou égale à un millimètre, une couche fluide non polymérisée de résine époxy colorée et opaque ;
- laisser polymériser la couche de résine époxy jusqu'à obtenir un élément monobloc formé d'une couche rigide de résine époxy soudée à la plaque rigide.

Pour conférer une adhérence aux aliments disposés sur l'élément de vaisselle, après avoir usiné la face supérieure de la plaque rigide, une opération d'abrasion de matière peut être réalisée au moins sur la face usinée.

Préférentiellement, l'opération d'abrasion peut être une opération de sablage réalisée par microbillage.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure la est une vue de dessus d'un élément de vaisselle conforme à l'invention, ledit élément se présentant sous la forme d'une assiette plate ;
- la figure 1b est une vue en coupe selon A-A de l'élément de vaisselle selon la figure la ;
- la figure 2a est une vue de dessus d'un élément de vaisselle conforme à l'invention, ledit élément se présentant sous la forme d'un bol ;
- la figure 2b est une vue en coupe selon B-B de l'élément de vaisselle selon la figure 2a ;
- la figure 3a est une vue de dessus d'un autre exemple de réalisation d'un élément de vaisselle conforme à l'invention, ledit élément se présentant sous la forme d'une planche à découper ou d'un plateau ;
- la figure 3b est une vue en coupe selon C-C de l'élément de vaisselle selon la figure 3a ;
- les figures 4a à 4d illustrent différentes étapes du procédé de fabrication d'un élément de vaisselle conforme à l'invention ;
- les figures 5a à 5d illustrent différentes étapes d'un autre procédé de fabrication d'un élément de vaisselle conforme à l'invention ;
- les figures 6a à 6d illustrent différentes étapes d'encore un autre procédé de fabrication d'un élément de vaisselle conforme à l'invention.

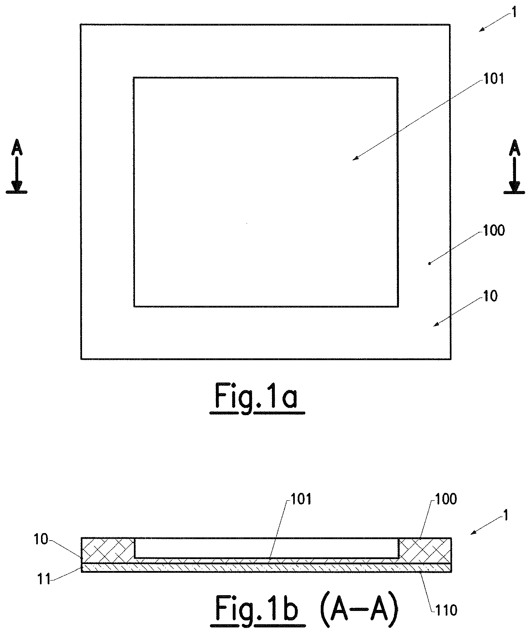

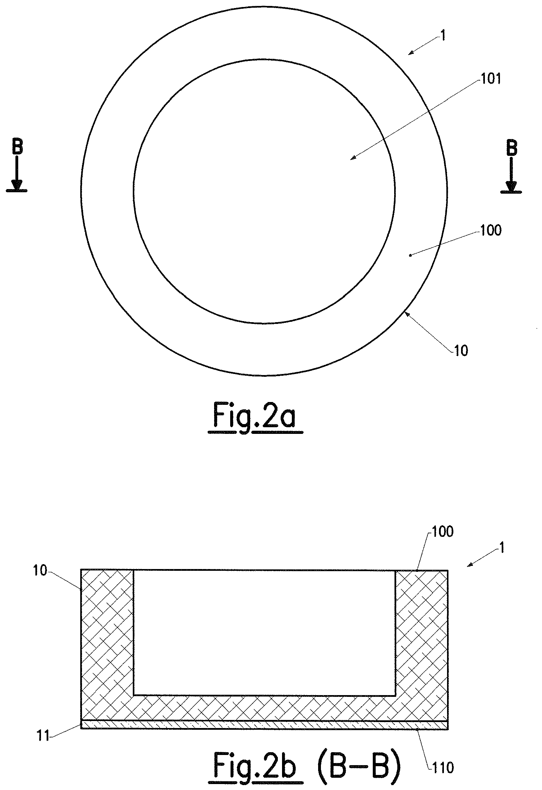

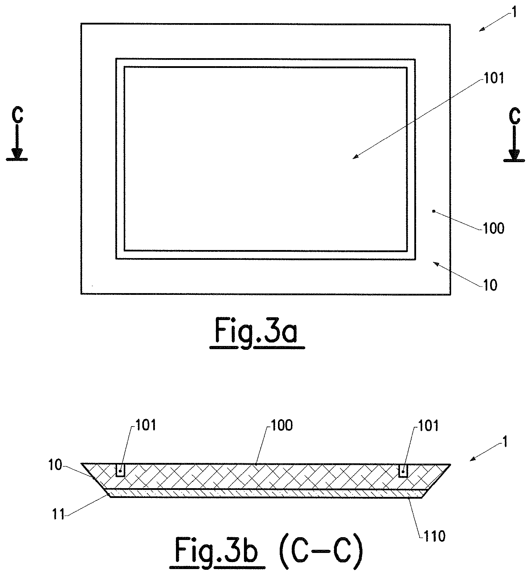

L'élément de vaisselle, objet de l'invention, est destiné à contenir des produits destinés à l'alimentation humaine. Il peut être de forme générale carrée (figure 1a), ronde (figure 2a), rectangulaire (figure 3a), ovale, ou autres, et être mince (figures la et 3a), épais (figure 2a), etc. Il ne saurait être limité à ces seules formes.

En se rapportant aux exemples illustrés sur les figures annexées, l'élément de vaisselle 1 comprend deux couches rigides 10 et 11 formant un ensemble monobloc. Elles peuvent être avantageusement soudées ou fixées ensemble par tous moyens.

La première couche, dite couche supérieure, 10 présente une face 100, comportant une ou plusieurs formes en creux 101, pour recevoir et retenir les aliments. En pratique, la face 100 est plane mais elle pourrait être concave, convexe, striée, etc. Elle est dimensionnée pour contenir une ou plusieurs portions ou plusieurs pièces telles que des petits fours, des brochettes, des mignardises ou autres.

Les figures la à 3b illustrent différents exemples de modèles d'éléments de vaisselle. Sur les figures la et 1b, l'élément 1 se présente, par exemple, sous la forme d'une assiette plate dont la face de réception 100 comprend une empreinte carrée 101, dont les côtés ont des dimensions comprises entre cent millimètres à deux cents millimètres, et dont la profondeur est comprise entre un millimètre et vingt millimètres. Sur les figures 2a et 2b, l'élément 1 consiste en un bol cylindrique dont la face 100 est pourvue d'une empreinte cylindrique 101 ayant un diamètre interne compris entre cinquante millimètres et cent millimètres à deux cents millimètres, et dont la profondeur est comprise entre cinquante millimètres et cent cinquante millimètres. Sur les figures 3a et 3b, l'élément 1 est un plat, ou un plateau, rectangulaire dont la face de réception plane 100 est délimitée par une rigole rectangulaire 101, permettant de récupérer du jus ou une sauce. D'autres modèles tels que tasses, soucoupes, verres, ou autres sont bien évidemment envisageables. Avantageusement, la première couche supérieure 10 peut ne pas comporter d'empreintes ou de formes en creux.

La couche inférieure 11 présente une sous face 110 formant embase. Lorsque l'élément 1 est utilisé et posé sur une table ou tout autre support similaire, c'est la sous face 110 qui est en contact avec ce dernier. La sous face 110 est préférentiellement plane pour un meilleur maintien, mais une forme non plane, par exemple convexe, peut être envisagée.

En pratique, et dans le but de simplifier la conception de l'élément 1, les deux couches rigides 10 et 11 présentent le même contour. Toutefois, et comme cela apparait sur la figure 3b, les bords de l'élément 1 peuvent être biseautés selon un angle allant de vingt à quarante-cinq degrés pour faciliter la préhension dudit élément lorsqu'il est posé sur une table.

La couche supérieure 10 est essentiellement constituée de résine époxy alimentaire ou de polyméthacrylate de méthyle alimentaire (ci-après PMMA). Par « essentiellement constituée », on entend que la première couche 10 comprend plus de 90%, avantageusement plus de 95%, et préférentiellement plus de 99%, en poids de résine époxy alimentaire ou de PMMA alimentaire. Conformément à l'invention, le matériau constitutif de la première couche 10 est incolore et translucide ou transparent. De très bons résultats sont obtenus lorsque le matériau utilisé à un indice de réfraction compris entre 1,3 et 1,6 avantageusement environ 1,5.

La couche inférieure 11 est essentiellement constituée de résine époxy. Cette résine n'est pas nécessairement alimentaire puisque ladite couche 11 n'est pas destinée à être en contact avec des aliments. Toutefois, on peut utiliser une résine époxy similaire à celle de la première couche 10, mais contenant des pigments, par exemple des pigments employés pour les peintures, de manière à la colorer et à la rendre opaque. Par « essentiellement constituée », on entend que la seconde couche 11 comprend plus de 90%, avantageusement plus de 95%, et préférentiellement plus de 99%, en poids de résine époxy.

La couche 10 a avantageusement une épaisseur supérieure ou égale à trois millimètres. La couche 11 est de moindre épaisseur, cette dernière étant toutefois avantageusement supérieure ou égale à un millimètre. De très bons résultats sont obtenus lorsque la couche 10 a une épaisseur supérieure ou égale à trois millimètres, et la couche 11, une épaisseur inférieure à deux millimètres. Ces proportions, combinées à l'agencement des différentes couches et aux caractéristiques des matériaux utilisés, agissent en synergie pour que la lumière ambiante puisse traverser la couche 10 et se réfléchir sur la couche 11, laquelle réflexion engendre un effet visuel tel que des aliments semblent être en sustentation.

Pour permettre une meilleure accroche des aliments sur la couche supérieure 10, assurer une stabilité des aliments sur l'élément, et ainsi permettre aux « chefs cuisiniers » de dresser des éléments de vaisselle de façon inégalée auparavant, la couche supérieure 10 est avantageusement une surface antidérapante. Une telle surface antidérapante peut être avantageusement créée en procédant à une opération d'abrasion de matière, qui donne un effet givré à l'élément 1. Les aliments glissent peu et l'effet de sustentation est ainsi amplifié. Une telle opération d'abrasion de matière peut être réalisée par ponçage ou polissage. Elle est préférentiellement effectuée par sablage, ledit sablage étant réalisée par microbillage. La face 100 peut ainsi ne pas nécessairement comporter de formes en creux ou d'empreintes, du fait de l'adhérence conférée par la surface antidérapante de la couche supérieure 10 de l'élément 1.

Le procédé de fabrication de l'élément de vaisselle, objet de l'invention va maintenant être décrit plus en détail.

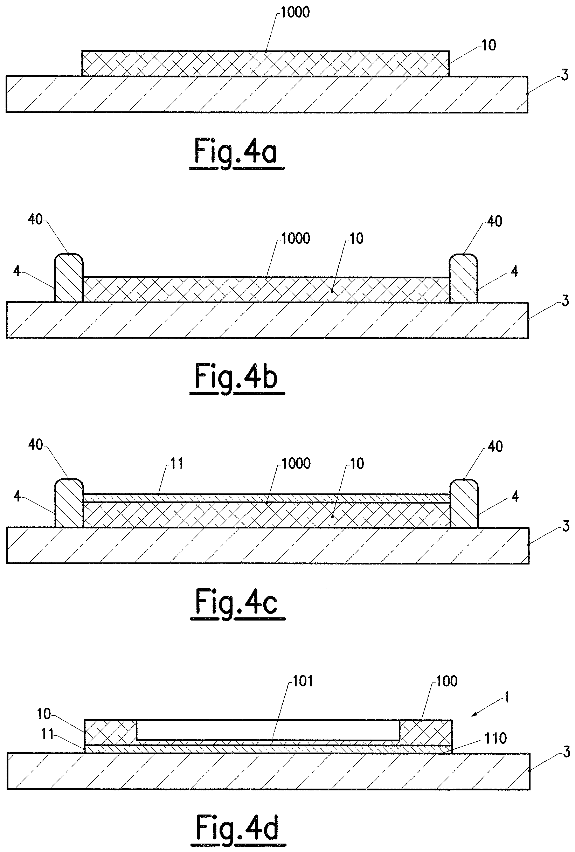

Un premier mode de fabrication est illustré sur les figures 4a à 4d. On commence par découper, selon le contour final souhaité de l'élément 1, une plaque rigide 10 essentiellement constituée de résine époxy alimentaire ou de polyméthacrylate de méthyle. En pratique, cette plaque 10 a une épaisseur supérieure ou égale à trois millimètres, mais est également incolore et translucide. La découpe s'effectue par une technique connue, par exemple à la scie, au fil chaud, au laser, au jet d'eau. Par exemple, la plaque 10 est avantageusement découpée aux dimensions allant de soixante millimètres à trois cents millimètres pour la réalisation d'assiettes ou de bols, et de quatre-vingts millimètres à mille millimètres pour la réalisation de plats ou plateaux.

On pose la plaque 10 découpée sur un support rigide 3 (figure 4a). Un coffrage 4 est alors appliqué de manière étanche contre le contour de la plaque 10 (figure 4b). Ce coffrage 4 présente des bordures 40 qui dépassent la surface libre 1000 de la plaque 10. Pour simplifier sa mise en place et optimiser l'étanchéité, le coffrage 4 est souple. Il s'agit d'une bande adhésive ou d'une bande silicone qui peut facilement s'adapter aux contours de la plaque 10. Un moule rigide, réalisé par exemple en métal ou en plastique, peut toutefois être employé.

On vient couler sur la surface libre 1000 de la plaque découpée 10, une couche fluide 11 de résine époxy préalablement colorée et opaque (figure 4c). Cette résine est coulée à l'état non polymérisé sur une épaisseur supérieure ou égale à un millimètre, préférentiellement sur une épaisseur inférieure à deux millimètres. Cette étape est réalisée à température ambiante, sans qu'il soit nécessaire de chauffer préalablement la résine 11 et sans aucune autre intervention, que ce soit, à titre d'exemples non limitatifs un ponçage, l'utilisation d'un solvant, un lavage. Il est à noter que la plaque 10 permet d'assurer une parfaite planéité de la surface 1000 sur laquelle on vient couler la résine 11.

Après polymérisation de la résine, on obtient un élément 1 monobloc formé d'une couche rigide 11 de résine époxy assemblée à la plaque rigide 10. La demanderesse a constaté que la cohésion des deux couches était améliorée lorsque la résine 11 était préalablement mélangée à une composition contenant de l'acétone et/ou du toluène avant d'être coulée.

Une fois polymérisé, l'élément rigide 1 est retourné. La face supérieure translucide 100 de la plaque 10 est usinée de manière à obtenir des formes en creux 101 permettant de recevoir et retenir les aliments (figure 4d). L'usinage est réalisé au moyen de machines habituellement employées dans l'industrie telles que des machines à commandes numériques. Cette étape d'usinage est optionnelle.

En variante ou en complément de l'usinage de la face supérieure 100, il peut être avantageux de procéder à une opération d'abrasion de matière, afin de donner un effet givré à l'élément 1 et former des surfaces antidérapantes évitant audit élément et aux aliments de glisser. Cette opération de finition est réalisée au moins sur la face usinée 100 et peut aussi être avantageusement effectuée sur la sous face 110 formant embase. Il s'agit préférentiellement d'une opération de sablage ou une opération de microbillage.

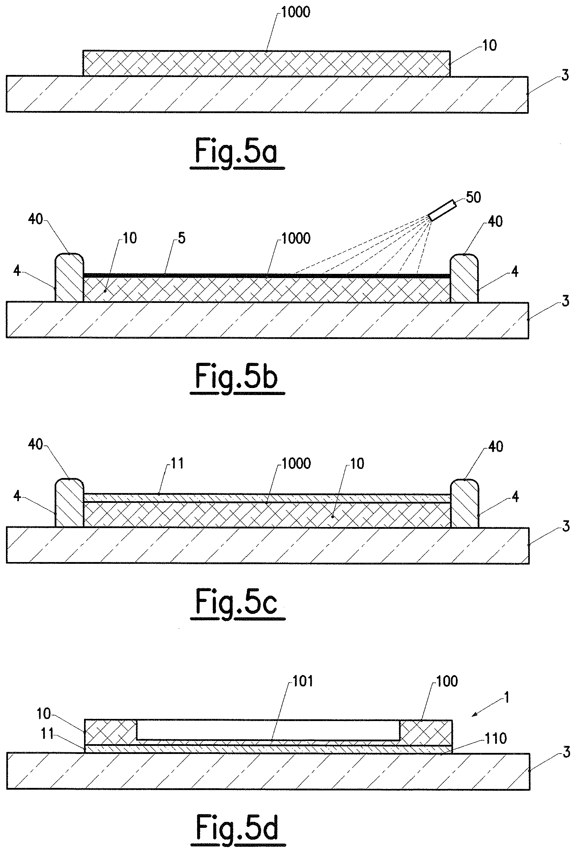

Le procédé illustré sur les figures 5a à 5d comprend une succession d'étapes similaires à celles décrites précédemment. Toutefois, comme cela apparait sur la figure 5b, une composition 5 contenant de l'acétone et/ou du toluène est préalablement appliquée sur la surface libre 1000 de la plaque 10, avant coulage de la résine époxy 11. Cette application est effectuée au moyen d'un spray 50 ou d'un pinceau, et a pour but d'améliorer la cohésion entre les deux couches 10 et 11. Dans ce cas, il n'est pas nécessaire de mélanger une autre composition contenant de l'acétone et/ou du toluène avec la résine 11, avant coulage.

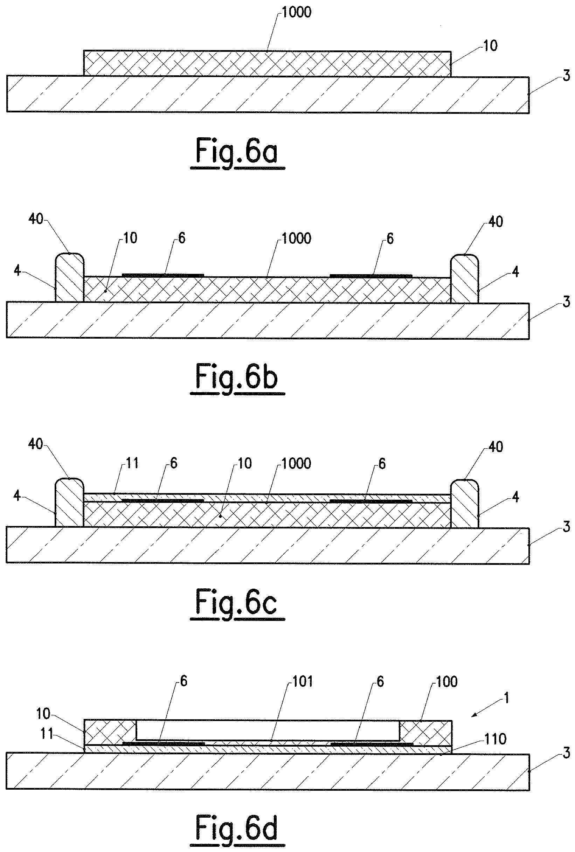

Le procédé illustré sur les figures 6a à 6d est similaire à ceux décrits précédemment en référence aux figures 4a à 4d, ou 5a, à 5d. Un ou plusieurs éléments décoratifs 6, tels que, à titre d'exemples non limitatifs, des sérigraphies, des objets, des lettres, des dessins, ou bien des photos, sont agencés sur la surface libre 1000 de la plaque 10 avant coulage de la résine 11. La surface occupée par les éléments 6 est toutefois inférieure à celle de la surface libre 1000, avantageusement inférieure de 50%, de façon à ne pas perturber l'effet visuel mentionné précédemment dans la description. Ce type d'inclusion permet de personnaliser l'élément 1.

Dans une variante de réalisation, après coulage de la résine époxy 11 sur la plaque 10, l'ensemble « plaque 10-résine 11 » est chauffé à une température comprise entre 130°C et 150°C pendant une période comprise entre 5 min et 20 min. Cet ensemble peut par exemple être inséré dans un dispositif d'étuve convenablement réglé. Cette technique de vulcanisation permet de créer une cohésion entre les deux matières qui rend l'élément de vaisselle 1 particulièrement résistant et difficilement cassable.

Par ailleurs, un deuxième procédé de fabrication, ne faisant pas partie de l'invention, peut être utilisé. Un tel deuxième procédé de fabrication comprend également une succession d'étapes similaires à celles décrites précédemment. Néanmoins, en lieu et place d'une découpe d'une plaque rigide 10 essentiellement constituée de résine époxy alimentaire ou de polyméthacrylate de méthyle, un coffrage 4 est appliqué de manière étanche contre le contour de la plaque 10 non découpée. Comme décrit précédemment, ce coffrage 4 présente des bordures 40 qui dépassent la surface libre 1000 de la plaque 10. Pour simplifier sa mise en place et optimiser l'étanchéité, le coffrage 4 peut être souple. Il peut s'agir d'une bande adhésive ou d'une bande de silicone, qui peut facilement s'adapter aux contours de la plaque 10. Néanmoins, pour ce procédé de fabrication particulier, un moule rigide, par exemple réalisé en métal ou en plastique, peut être préférentiellement employé. Un tel coffrage 4 peut être avantageusement ajusté aux dimensions de la plaque 10 non découpée. La plaque rigide 10, après avoir été inséré dans ledit moule ou coffrage, est placée dans un dispositif de chauffage adapté et convenablement réglé. Plusieurs plaques rigides 10 contenus dans leurs coffrages 4 respectifs peuvent être simultanément positionnés dans un même dispositif d'étuve. Cette étape de chauffage permet un « ramollissement » de la plaque rigide, puisque la température de fusion de la plaque rigide est d'environ 120°C.

Après quelques minutes, avantageusement une dizaine de minutes dans un dispositif de chauffage préchauffé à une température comprise entre 100°C et 150°C, une couche fluide 11 de résine époxy, opaque et préalablement éventuellement colorée, est coulée, de manière étanche, sur la surface libre 1000 de la plaque non découpée 10 placée dans le moule. Cette résine est coulée à l'état non polymérisé sur une épaisseur supérieure ou égale à un millimètre, préférentiellement sur une épaisseur inférieure à deux millimètres.

Puis l'ensemble est à nouveau chauffé dans une étuve à une température comprise entre 100 et 150°C pendant dix à quinze minutes : cette étape de vulcanisation permet de créer une accroche entre les deux couches et assure la bonne cohésion de l'ensemble pour constituer un matériau composite selon l'invention.

Une fois l'ensemble sec et froid, le procédé peut comporter une étape de sérigraphie de motifs, lettres ou signatures par exemple.

Par ailleurs, le procédé comporte une opération d'abrasion de matière sur la plaque 10 du matériau, afin de donner un effet givré au matériau composite et former des surfaces antidérapantes. Il s'agit préférentiellement d'une opération de sablage ou une opération de microbillage.

Enfin, le matériau composite est retourné, puis découpé grâce à des techniques classiques, telles que, à titre d'exemples non limitatifs, scie, fil chaud, laser, jet d'eau, etc.

En complément, le procédé peut en outre comporter une étape de pose d'un vernis alimentaire sur l'une ou l'autre des faces du matériau composite obtenu.

## Revendications

1. Elément de vaisselle (1) pour contenir des aliments, dans lequel ledit élément de vaisselle (1) est en matériau composite et comporte deux couches rigides : une couche supérieure (10) présentant une face (100) et une couche inférieure (11) présentant une sous face (110) formant embase, où :
- la couche supérieure (10) a une épaisseur supérieure ou égale à trois millimètres et est incolore et translucide;
- la couche inférieure (11) a une épaisseur supérieure ou égale à un millimètre, restant inférieure à celle de la première couche (10);
- les deux couches (10, 11) coopèrent mutuellement et forment un élément monobloc;
ledit élément de vaisselle (1) étant **caractérisé en ce que** :
- la couche supérieure (10) est essentiellement constituée de résine époxy alimentaire ou de polyméthacrylate de méthyle alimentaire, ladite résine ou ledit polyméthacrylate étant incolore et translucide ; et
- la couche inférieure (11) est essentiellement constituée de résine époxy opaque.

2. Elément de vaisselle (1) selon la revendication 1, dans lequel la résine époxy opaque est colorée.

3. Elément de vaisselle (1) selon les revendications 1 ou 2, dans lequel la face (100) de la couche supérieure (10) est une surface antidérapante.

4. Elément de vaisselle (1) selon l'une quelconque des revendications précédentes, dans lequel la couche inférieure (11) une épaisseur inférieure à deux millimètres.

5. Elément de vaisselle (1) selon l'une quelconque des revendications précédentes, dans lequel la couche supérieure (10) possède un indice de réfraction compris entre 1,3 et 1,6.

6. Elément de vaisselle (1) selon l'une des revendications précédentes, dans lequel une couche intermédiaire comportant des éléments décoratifs est insérée entre les couches inférieure et supérieure.

7. Elément de vaisselle (1) selon l'une quelconque des revendications précédentes, comportant une ou plusieurs formes en creux.

8. Procédé de fabrication d'un élément de vaisselle (1) conforme a l'une des revendications 1 à 7, ledit procédé comprenant les étapes consistant à:
- découper, selon un contour souhaité, une plaque rigide (10) essentiellement constituée de résine époxy alimentaire ou de polyméthacrylate de méthyle alimentaire, ladite plaque ayant une épaisseur supérieure ou égale à trois millimètres et étant incolore et translucide;
- poser la plaque rigide (10) découpée sur un support rigide (3) et appliquer, de manière étanche, un coffrage (4) contre le contour de ladite plaque, ledit coffrage présentant des bordures (40) qui dépassent la surface libre (1000) de ladite plaque;
- couler, sur la surface libre (1000) de la plaque rigide (10) découpée, et sur une épaisseur supérieure ou égale à un millimètre, une couche de résine époxy (11) fluide non polymérisée et éventuellement colorée;
- laisser polymériser la couche de résine époxy (11) jusqu'à obtenir un élément de vaisselle (1) monobloc formé d'une couche de résine époxy (11) rigide et formant une couche inférieure de l'élément de vaisselle (1) soudée à la plaque rigide (10) formant une couche supérieure de l'élément de vaisselle (1).

9. Procédé selon la revendication 8, comportant une étape consistant à usiner la face supérieure (100) de la plaque rigide (10) de manière à obtenir des formes en creux (101) permettant de recevoir et retenir des aliments.

10. Procédé selon les revendications 8 ou 9, dans lequel avant coulage de la couche de résine époxy (11), un coffrage (4) souple est appliqué de manière étanche contre le contour de la plaque rigide (10) découpée.

11. Procédé selon l'une quelconque des revendications 8 à 10, dans lequel une composition contenant de l'acétone et/ou du toluène est mélangée à la couche de résine époxy (11) avant coulage sur la surface libre (1000) de la plaque rigide (10) découpée.

12. Procédé selon l'une quelconque des revendications 8 à 10, dans lequel une composition (5) contenant de l'acétone et/ou du toluène est appliquée sur la surface libre (1000) de la plaque rigide (10) découpée avant coulage de la couche de résine époxy (11).

13. Procédé selon l'une quelconque des revendications 8 à 10, dans lequel après coulage de la couche de résine époxy (11), l'ensemble est chauffé à une température comprise entre 130 °C et 150 °C pendant une période comprise entre 5 min et 20 min.

14. Procédé selon l'une des revendications 8 à 13, dans lequel un ou plusieurs éléments décoratifs (6) sont agencés sur la surface libre (1000) de la plaque rigide (10) découpée avant coulage de la couche de résine époxy (11), la surface occupée par lesdits éléments décoratifs étant inférieure à celle de la surface libre (1000).

15. Procédé selon l'une des revendications 8 à 14, dans lequel, après avoir usiné la face supérieure (100) de la plaque rigide (10), une opération d'abrasion de matière est réalisée au moins sur la face supérieure (100) usinée et sur la sous face en résine époxy colorée et opaque formant embase.

## Patentansprüche

1. Geschirrelement (1), um Lebensmittel zu enthalten, wobei das Geschirrelement (1) aus Verbundmaterial ist und zwei starre Schichten umfasst:
eine obere Schicht (10), die eine Fläche (100) aufweist, und eine untere Schicht (11), die eine Unterfläche (110) aufweist, welche eine Basis bildet, wobei:
- die obere Schicht (10) eine Dicke von größer als oder gleich drei Millimeter aufweist und farblos und durchsichtig ist;
- die untere Schicht (11) eine Dicke von größer als oder gleich einem Millimeter aufweist, welche kleiner als diejenige der ersten Schicht (10) bleibt;
- die zwei Schichten (10, 11) miteinander zusammenwirken und ein einstückiges Element bilden;
wobei das Geschirrelement (1) **dadurch gekennzeichnet ist, dass**:
- die obere Schicht (10) im Wesentlichen aus lebensmittelechtem Epoxidharz oder lebensmittelechtem Methylpolymethacrylat besteht, wobei das Harz oder Polymethacrylat farblos und durchsichtig ist; und
- die untere Schicht (11) im Wesentlichen aus undurchsichtigem Epoxidharz besteht.

2. Geschirrelement (1) nach Anspruch 1, wobei das undurchsichtige Epoxidharz farbig ist.

3. Geschirrelement (1) nach den Ansprüchen 1 oder 2, wobei die Fläche (100) der oberen Schicht (100) eine rutschfeste Oberfläche ist.

4. Geschirrelement (1) nach einem der vorstehenden Ansprüche, wobei die untere Schicht (11) eine Dicke von kleiner als zwei Millimeter.

5. Geschirrelement (1) nach einem der vorstehenden Ansprüche, wobei die obere Schicht (10) einen Brechungsindex im Bereich zwischen 1,3 und 1,6 besitzt.

6. Geschirrelement (1) nach einem der vorstehenden Ansprüche, wobei eine Zwischenschicht, die dekorative Elemente umfasst, zwischen der unteren und oberen Schicht eingefügt ist.

7. Geschirrelement (1) nach einem der vorstehenden Ansprüche, das eine oder mehrere Hohlformen umfasst.

8. Verfahren zur Herstellung eines Geschirrelements (1), das einem der Ansprüche 1 bis 7 entspricht, wobei das Verfahren die Schritte umfasst, die bestehen im:
- Zuschneiden, gemäß einer gewünschten Kontur, einer starren Platte (10), die im Wesentlichen aus lebensmittelechtem Epoxidharz oder aus lebensmittelechtem Methylpolymethacrylat besteht, wobei die Platte eine Dicke von größer als oder gleich drei Millimeter aufweist und farblos und durchsichtig ist;
- Legen der zugeschnittenen starren Platte (10) auf eine starre Unterlage (3) und Anbringen, in dichter Weise, einer Schalung (4) gegen die Kontur der Platte, wobei die Schalung Ränder (40) aufweist, die über die freie Oberfläche (1000) der Platte überstehen;
- Gießen, auf die freie Oberfläche (1000) der zugeschnittenen starren Platte (10) und auf eine Dicke von größer als oder gleich einem Millimeter, einer Schicht aus flüssigem, nicht polymerisiertem und gegebenenfalls farbigem Epoxidharz (11);
- Polymerisierenlassen der Epoxidharzschicht (11), bis ein einstückiges Geschirrelement (1) erhalten wird, das von einer starren Epoxidharzschicht (11) gebildet wird und eine untere Schicht des Geschirrelements (1) bildet, welche mit der starren Platte (10) verschweißt ist, die eine obere Schicht des Geschirrelements (1) bildet.

9. Verfahren nach Anspruch 8, umfassend einen Schritt, der im Zerspanen der oberen Fläche (100) der starren Platte (10) besteht, um Hohlformen (101) zu erhalten, die es ermöglichen, Lebensmittel aufzunehmen und zu halten.

10. Verfahren nach den Ansprüchen 8 oder 9, wobei vor dem Gießen der Epoxidharzschicht (11) eine nachgiebige Schalung (4) in dichter Weise gegen die Kontur der zugeschnittenen starren Platte (10) angebracht wird.

11. Verfahren nach einem der Ansprüche 8 bis 10, wobei vor dem Gießen auf die freie Oberfläche (1000) der zugeschnittenen starren Platte (10) der Epoxidharzschicht (11) eine Aceton und/oder Toluol enthaltende Zusammensetzung beigemischt wird.

12. Verfahren nach einem der Ansprüche 8 bis 10, wobei vor dem Gießen der Epoxidharzschicht (11) eine Aceton und/oder Toluol enthaltende Zusammensetzung (5) auf die freie Oberfläche (1000) der zugeschnittenen starren Platte (10) aufgebracht wird.

13. Verfahren nach einem der Ansprüche 8 bis 10, wobei die Einheit nach dem Gießen der Epoxidharzschicht (11) für einen Zeitraum im Bereich zwischen 5 Min. und 20 Min. auf eine Temperatur im Bereich zwischen 130 °C und 150 °C erhitzt wird.

14. Verfahren nach einem der Ansprüche 8 bis 13, wobei vor dem Gießen der Epoxidharzschicht (11) ein oder mehrere dekorative Elemente (6) auf der freien Oberfläche (1000) der zugeschnittenen starren Platte (10) angeordnet werden, wobei die Oberfläche, die von den dekorativen Elementen eingenommen wird, kleiner ist als diejenige der freien Oberfläche (1000).

15. Verfahren nach einem der Ansprüche 8 bis 14, wobei nachdem die obere Fläche (100) der starren Platte (10) zerspant wurde, ein Materialschleifvorgang an mindestens der zerspanten oberen Fläche (100) und an der Unterfläche aus farbigen und undurchsichtigem Epoxidharz, die eine Basis bildet, ausgeführt wird.

## Claims

1. A dishware element (1) for containing foodstuffs, wherein said dishware element (1) is made of a composite material and includes two rigid layers: an upper layer (10) having a face (100) and a lower layer (11) having an underside (110) forming a base, where:
- the upper layer (10) has a thickness larger than or equal to three millimeters and is colorless and translucent;
- the lower layer (11) has a thickness larger than or equal to one millimeter, remaining smaller than that of the first layer (10);
- the two layers (10, 11) cooperate together and form an integral element; said dishware element (1) being **characterized in that**:
- the upper layer (10) is essentially constituted by a food-grade epoxy resin or by a food-grade poly(methyl methacrylate), said resin or said polymethacrylate being colorless and translucent; and
- the lower layer (11) is essentially constituted by an opaque epoxy resin.

2. The dishware element (1) according to claim 1, wherein the opaque epoxy resin is colored.

3. The dishware element (1) according to claims 1 or 2, wherein the face (100) of the upper layer (10) is a slip-resistant surface.

4. The dishware element (1) according to any one of the preceding claims, wherein the lower layer (11) has a thickness smaller than two millimeters.

5. The dishware element (1) according to any one of the preceding claims, wherein the upper layer (10) has a refractive index comprised between 1.3 and 1.6.

6. The dishware element (1) according to any of the preceding claims, wherein an intermediate layer including decorative elements is inserted between the lower and upper layers.

7. The dishware element (1) according to any one of the preceding claims, including one or several hollow shape(s).

8. A method for manufacturing a dishware element (1) in accordance with any of claims 1 to 7, said method comprising the steps consisting in:
- cutting, according to a desired outline, a rigid plate (10) essentially constituted by a food-grade epoxy resin or by a food-grade poly(methyl methacrylate), said plate having a thickness larger than or equal to three millimeters and being colorless and translucent;
- setting the cut rigid plate (10) on a rigid support (3) and tightly applying a formwork (4) against the outline of said plate, said formwork having boundaries (40) which surpass the free surface (1000) of said plate;
- casting, on the free surface (1000) of the cut rigid plate (10), and over a thickness larger than or equal to one millimeter, a layer (11) of uncured and possibly colored fluid epoxy resin;
- letting the epoxy resin layer (11) cure until obtaining an integral dishware element (1) formed by a rigid epoxy resin layer (11) forming a lower layer of the dishware element (1) welded to the rigid plate (10) forming an upper layer of the dishware element (1).

9. The manufacturing method according to claim 8, including a step consisting in machining the upper face (100) of the rigid plate (10) so as to obtain hollow shapes (101) allowing receiving and retaining foodstuffs.

10. The manufacturing method according to claims 8 or 9, wherein, before casting of the epoxy resin layer (11), a flexible formwork (4) is tightly applied against the outline of the cut rigid plate (10).

11. The manufacturing method according to any one of claims 8 to 10, wherein a composition containing acetone and/or toluene is mixed with the epoxy resin layer (11) before casting on the free surface (1000) of the cut rigid plate (10).

12. The manufacturing method according to any one of claims 8 to 10, wherein a composition (5) containing acetone and/or toluene is applied on the free surface (1000) of the cut rigid plate (10) before casting of the epoxy resin layer (11).

13. The manufacturing method according to any one of claims 8 to 10, wherein, after casting of the epoxy resin layer (11), the set is heated up to a temperature comprised between 130°C and 150°C for a period comprised between 5 min and 20 min.

14. The manufacturing method according to any of claims 8 to 13, wherein one or several decorative element(s) (6) are arranged on the free surface (1000) of the cut rigid plate (10) before casting of the epoxy resin layer (11), the surface area occupied by said decorative elements being smaller than that of the free surface (1000).

15. The manufacturing method according to any of claims 8 to 14, wherein, after having machined the upper face (100) of the rigid plate (10), a material abrasion operation is carried out on the machined upper face (100) and on the underside made of colored and opaque epoxy resin forming a base.
